# EUROPEAN PATENT APPLICATION

(11) **EP 3 098 986 A1**
(43) Date of publication of application: **30.11.2016**
(21) Application number: 16171677.4
(22) Date of filing: 27.05.2016
(51) Int. Cl.: H04H 60/04, H04N 5/262

(54) **SIGNAL PROCESSING APPARATUS AND CONTROLING METHOD**

(30) Priority: 27.05.2015 JP 2015107361
(71) Applicant: YAMAHA CORPORATION, Hamamatsu-shi Shizuoka-ken 430-8650 (JP)
(72) Inventor: Miwa, Akihiro, Shizuoka-ken, 430-8650 (JP); Nishikori, Taku, Shizuoka-ken, 430-8650 (JP); Tanaka, Takumi, Shizuoka-ken, 430-8650 (JP)
(74) Representative: Hoffmann Eitle

(57) **Abstract**

A signal processing apparatus includes: a memory, a signal processing section, a user interface, and an assigner. The assigner that, in response to an installation of a plug-in from a user, confirms whether or not a plug-in is already mounted on the signal processing section, and if a confirmation is negative, assigns predetermined resource to the plug-in to mount the plug-in on the signal processing section.

## Description

### BACKGROUND

### 1. Field

Some preferred embodiments of the present invention relate to a signal processing apparatus that performs signal processing on an audio signal, using a plug-in installed in a virtual slot.

### 2. Description of the Related Art

Conventionally, some of signal processing apparatuses using a DSP (Digital Signal Processor) for audio signal processing such as a digital mixer, a processor, or a DAW (Digital Audio Workstation) have allowed a user to install a desired plug-in in predetermined plural virtual installation locations (virtual slots).

Such a signal processing apparatus, when receiving from the user an instruction to install a plug-in in a virtual slot, assigns processing capability (resource) of the DSP to an installed plug-in installed according to the instruction. The signal processing apparatus causes the DSP to perform signal processing of the installed plug-in by using the assigned resource.

In addition, the signal processing apparatus is generally provided with a preset memory that stores a plurality of setting patterns (preset) for signal processing. The preset memory may also be called as a scene memory or a library. The signal processing apparatus, when a user selects a desired preset and recalls the preset, is capable of reproducing the setting of signal processing corresponding to the preset. The signal processing of the plug-in is also reproduced by such a recall operation. The plug-in that is not changed by the recall operation is required to continue the signal processing during the recall operation and not to interrupt processed sound.

The signal processing apparatus, during operation, that is, while the signal processing apparatus performs signal processing, if changing the installation of the plug-in in each of the virtual slots by recalling the preset, needs to accordingly change the assignment of the resource with respect to the plug-in. As a result, there is a problem that sound processed with the plug-in that is not changed is temporarily interrupted for some perceptible length of time. For example, in signal processing including prolonged delay such as reverb, if the resource to be used is changed, the data of a delay buffer is cleared and a reverberant sound will be lost until the data is again accumulated in the delay buffer.

In order to prevent such a problem, a conventional signal processing apparatus disclosed in Digidesign, Avid Technology, Inc., "VENUE SC48 Guide and Software Version 2.8 for VENUE SC48 Systems," [online], [retrieved on May 5, 2015], the Internet <http://akmedia.digidesign.com/support/docs/SC48_Guide_v28_596 80.pdf>, while performing signal processing, prevents the resource assigned to a plug-in from being reassigned by preserving the installation of the plug-in in a virtual slot. Specifically, the signal processing apparatus has two operation modes: a configuration mode in which a mixing operation as a mixer is stopped and a mixer configuration is set by the user; and an execution mode in which signal processing is performed with the set mixer configuration. The user can change the installation of the plug-in in the virtual slot only in the configuration mode before entering the execution mode. The user, then, after the signal processing apparatus enters the execution mode, cannot change the installation of the plug-in until the apparatus enters the configuration mode again.

A preferred embodiment of the present invention is directed to provide a signal processing apparatus that, in the execution mode, allows a plug-in to be installed in a virtual slot and also prevents sound from being interrupted by a recall operation of a preset and the like, the sound having been processed by the plug-in that is not changed.

### SUMMARY

A signal processing apparatus according to a preferred embodiment of the present invention is a signal processing apparatus that performs signal processing on an audio signal by using a plug-in installed in a virtual slot. The signal processing apparatus includes a memory that stores plug-ins, each plug-in to be executed by a signal processor, using predetermined amount of resource of a signal processing section, the signal processing section that performs signal processing of at least one series of blocks on at least one audio signal, at least one virtual slot for installing the plug-in therein is provided between consecutive two of the blocks, a user interface that displays an image of the virtual slot, and accepts an installation of any plug-in in the virtual slot from a user, and an assigner that, in response to the installation of a plug-in from the user, confirms whether or not the plug-in is already mounted on the signal processing section, and if a confirmation is negative, assigns the predetermined amount of resource to the plug-in to mount the plug-in on the signal processing section, the signal processing section performs signal processing of the mounted plug-in on an audio signal supplied to the virtual slot in which the plug-in is installed.

A signal processing apparatus according to a preferred embodiment of the present invention is capable of changing the installation of a plug-in in a virtual slot in the execution mode and is also capable of preventing sound from being interrupted by a recall operation of a preset and the like, the sound having been processed by the plug-in that is not changed.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1A is a view showing an example of a hardware configuration of a digital mixer as a preferred embodiment of a signal processing apparatus.
Fig. 1B is a functional block diagram showing a configuration achieved by a CPU 10.
Fig. 2 is an enlarged view showing in detail a configuration of components around an audio signal processing section in the digital mixer shown in Fig. 1A.
Fig. 3A is a view showing an algorithm of mixing processing performed by the audio signal processing section in the digital mixer shown in Fig. 1A.
Fig. 3B is a view showing input/output of a plug-in in an imparting section 20.
Fig. 4 is a view showing a configuration of components around a channel strip in the digital mixer shown in Fig. 1A.
Fig. 5 is a view showing a configuration of a rack edit screen in the digital mixer shown in Fig. 1A.
Fig. 6A is a view for illustrating DSP resource management in the digital mixer shown in Fig. 1A.
Fig. 6B is a view for illustrating the DSP resource management in the digital mixer shown in Fig. 1A.
Fig. 7 is a view for illustrating the DSP resource management in the digital mixer shown in Fig. 1A.
Fig. 8A, Fig. 8B, Fig. 8C, and Fig. 8D are views illustrating an example procedure to change a plug-in in the digital mixer shown in Fig. 1A.
Fig. 9 is a flow chart of processing in which a PE in a slot is replaced, the processing being performed by the CPU 10 of the digital mixer shown in Fig. 1A.
Fig. 10A is a flow chart of store processing of a scene S performed by the CPU of the digital mixer shown in Fig. 1B, Fig. 10B is a flow chart of deletion processing of the scene S performed by the CPU of the digital mixer shown in Fig. 1B, and Fig. 10C is a flow chart of recall processing of the scene S performed by the CPU 10 of the digital mixer shown in Fig. 1B.

### DETAILED DESCRIPTION OF THE PREFERRED EMBODIMENTS

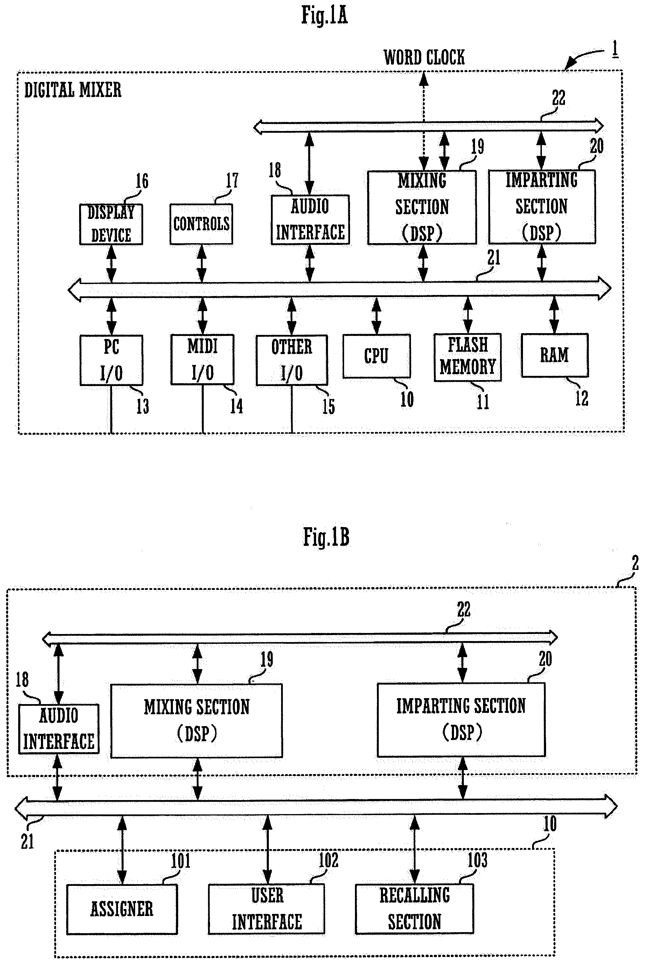

Fig. 1A is a view showing a configuration of a digital mixer 1 as a preferred embodiment of a signal processing apparatus according to a preferred embodiment of the present invention.

The digital mixer 1 shown in Fig. 1A includes components such as a CPU (Central Processing Unit) 10, a flash memory 11, a RAM (Random Access Memory) 12, a PC I/O (Personal Computer Interface) 13, a MIDI (Musical Instrument Digital Interface: registered trademark) I/O 14, other I/Os 15, a display device 16, controls 17, an A I/O (Audio Interface) 18, a mixing section 19, and an imparting section 20.

All of the components are connected to a CPU bus 21. In addition, the A I/O 18, the mixing section 19, and the imparting section 20 are also connected to an audio bus 22 for transmitting a digital audio signal.

The CPU 10 is a control section that controls the operation of the digital mixer 1. The CPU 10, by executing a predetermined program stored in the flash memory 11, performs processing such as inputting and outputting an audio signal in the A I/O 18, controlling display in the display device 16, editing a parameter according to the operation of any of the controls 17, controlling signal processing in the mixing processing section 19, and controlling signal processing in the imparting section 20.

In addition, the CPU 10, as shown in Fig. 1B, by reading and executing the program stored in the flash memory 11, achieves a assigner 101, a user interface 102, and a recalling section103.

The flash memory 11 stores a control program executed by the CPU 10, a preset, a plug-in, and the like. The flash memory 11 is a rewritable nonvolatile storage section.

The RAM 12 is a volatile storage section in which the CPU 10 writes and reads various kinds of data. The RAM 12 is used also as a work memory of the CPU 10.

The PC I/O 13, the MIDI I/O 14, and the other I/Os 15 are interfaces each of which connects various external devices and performs input and output operations. The PC I/O 13 is connected to an external personal computer, for example. The MIDI I/O 14 is connected to a MIDI enabled device such as a physical controller or an electronic musical instrument. The other I/Os 15 are connected to a display, for example. Alternatively, the other I/Os 15 are connected to a UI (User Interface) device such as a mouse or a keyboard. As the standards used for communication with the external devices, any desired standards including Ethernet (trademark) or a USB (Universal Serial Bus) can be used. The mode of connection may be wired or wireless.

The display device 16 displays various kinds of information according to the control of the CPU 10. The display device 16 may be configured with a liquid crystal panel (LCD) or a light emitting diode (LED), for example.

Each control 17 receives from a user an operation to the digital mixer 1. The control 17 may be configured with various keys, a button, a rotary encoder, a slider, or the like. In addition, the control 17 may also be configured with a touch panel stacked on the LCD being the display device 16.

The A I/O 18 is an interface for receiving an input of an audio signal to be processed in the mixing processing section 19. In addition, the A I/O 18 is also an interface for outputting the audio signal that has been processed in the mixing processing section 19.

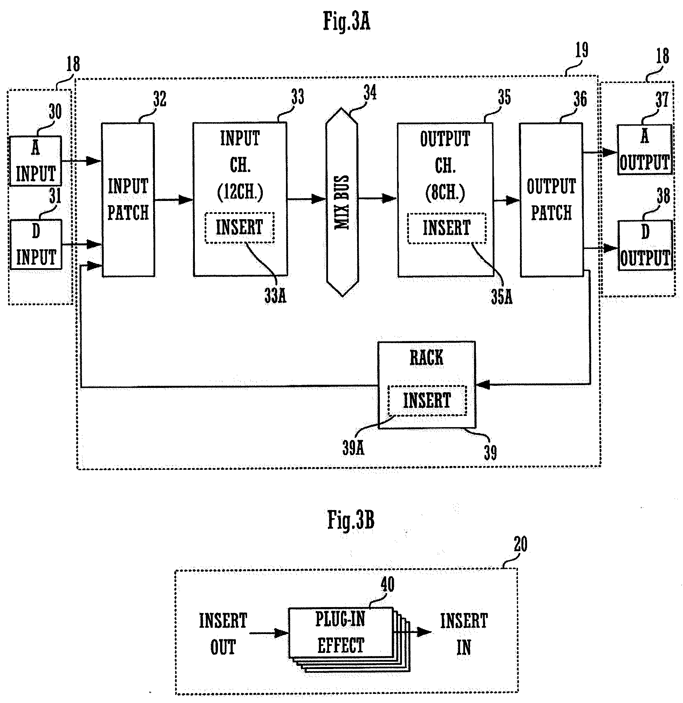

The A I/O 18 includes an AIN (Analog INput) port (A Input 30 in Fig. 3), an AOUT (Analog OUTput) port (A Output 37 in Fig. 3), a DIN (Digital INput) port (D Input 31 in Fig. 3), and a DOUT (Digital OUTput) port (D Output 38 in Fig. 3).

The AIN port receives an analog audio signal from the outside, converts the analog audio signal into a digital audio signal, and supplies the digital audio signal to the mixing processing section 19. The AOUT port converts the digital audio signal from the mixing processing section 19 into an analog audio signal and outputs the analog audio signal. The DIN port receives a digital audio signal in various transmission forms from the outside and supplies the digital audio signal to the mixing processing section 19. The DOUT port converts a digital audio signal from the mixing processing section 19 into a signal in the various transmission forms and outputs the signal to the outside.

The mixing processing section 19 is configured as a DSP group including a plurality of DSPs. The mixing processing section 19 performs signal processing such as mixing or equalizing on a digital audio signal to be supplied from the A I/O 18 through the audio bus 22. The mixing processing section 19 outputs the digital audio signal after the signal processing again to the A I/O 18 through the audio bus 22.

The signal processing of the mixing processing section 19 is controlled based on a current value (current data) of various processing parameters. The current data can be edited by the user using the controls 17. The current data is stored in a predetermined memory provided in the RAM 12 or the DSP. Hereinafter, the memory in which the current data is stored is referred to as a "current memory."

The imparting section 20 imparts an audio effect by using a plug-in effect 40 such as reverb, delay, or chorus to the digital audio signal in the middle of being processed in the mixing processing section 19. Hereinafter, the description of a "plug-in" means a plug-in effect.

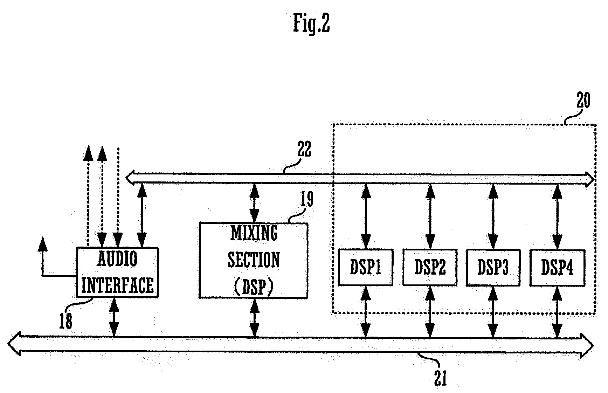

Fig. 2 is a view showing a detailed configuration of components around a signal processing section of the digital mixer 1 together with components around the signal processing section. The imparting section 20 is configured as a DSP group including a plurality of DSPs (DSP1, DSP2, DSP3, and DSP4 in the preferred embodiment).

The assigner 101 shown in Fig. 1B, by assigning processing capability (resource) of any DSP of the DSPs in an audio signal processing section 2 to a plug-in, causes the plug-in to be mounted on the DSP. In other words, the plug-in is executed by the DSP using predetermined resource of a signal processing section 2. Accordingly, the CPU 10 causes the imparting section 20 to perform signal processing of imparting an effect corresponding to each of plug-ins. Hereinafter, "mounting a plug-in" means assigning some resource of a DSP to a plug-in and causing the DSP to perform signal processing of the plug-in using the assigned resource.

The signal processing in the imparting section 20 is also controlled based on the current value (current data) of various processing parameters. The various processing parameters are also included in the current data. Each plug-in comprises a program of a signal processing to be executed by any DSP and parameters used in the signal processing for achieving an audio effect, such as reverb, delay, or chorus, and is stored in the flash memory 11. After some resource of a DSP is assigned to a plug-in, a program and parameters of the plug-in are read out from the flash memory 11 and stored in a work memory of the DSP (the RAM 12 or a built-in memory of each of the DSPs) as current data. In this manner, the digital mixer mounts each of the plug-ins and performs signal processing using the DSP.

In a case in which the signal processing of the plug-in is to be performed on an audio signal, the audio signal is supplied from the mixing processing section 19 to the imparting section 20 through the audio bus 22. More precisely, the mixing processing section 19 includes processing blocks connected in series, and an audio signal at a predetermined position between a certain processing block and the following processing block among the processing blocks, which is outputted from the above-mentioned certain processing block, is supplied to the imparting section 20. The imparting section 20 performs signal processing of the plug-in on the supplied audio signal and imparts an audio effect to the audio signal. The imparting section 20 returns the effect-imparted audio signal to the mixing processing section 19 through the audio bus 22. The mixing processing section 19 supplies the returned audio signal to the above-mentioned following processing block.

It is noted that samples of digital audio signals for each sampling period are supplied to the DSPs of the mixing processing section 19 and the DSPs of the imparting section 20 at a timing of each sampling period synchronous with a predetermined word clock (WORD CLOCK). Each of the DSPs performs signal processing on the samples of the digital audio signals and outputs the processed samples of the digital audio signals in each sampling period.

The audio bus 22 is capable of transmitting a 24-bit signal to 256 channels (ch), for example. Each of the channels is assigned to the output of any of the DSPs or the A I/O 18. Accordingly, the audio signal is supplied from each of the output ports of the A I/O 18 to the assigned channel of the audio bus 22. In addition, the DSP that desires to receive an audio signal from a predetermined output port of the A I/O 18 takes in the audio signal from the channel to which the above-mentioned predetermined output port has been assigned. Similarly, a predetermined input port of the A I/O 18 that desires to receive an audio signal from a predetermined output port of the A I/O 18 takes in the audio signal from the channel to which the above-mentioned predetermined output port has been assigned.

Fig. 3A is a view showing an algorithm of mixing processing performed by the audio signal processing section 2 configured by the A I/O 18, the mixing processing section 19, the imparting section 20, and the audio bus 22.

As shown in Fig. 3A, the signal processing in the mixing processing section 19 includes an input patch 32, input channels 33, mixing (MIX) buses 34, output channels 35, and an output patch 36.

The input patch 32 assigns any one of a plurality of ports in the AIN port (A Input) 30 and the DIN port (D input) 31 to at least one channel of the input channels 33 (12 channels, for example). Accordingly, the audio signal is supplied from the A I/O 18 to the one channel.

Each of the input channels 33 performs signal processing such as an equalizer or a compressor on the supplied audio signal. Each of the input channels 33 sends the audio signal after the signal processing out to, for example, one or more of the MIX buses 34 ( eight buses, for example). It is noted that the level of the audio signal to be sent out is capable of being individually changed with respect to each bus when the audio signal is sent out.

Each of the MIX buses 34 mixes audio signals to be input from the input channels 33. Each of the MIX buses 34 outputs the mixed audio signal to a corresponding one of the output channels 35. The output channels 35 are eight channels, for example.

Each of the output channels 35 performs signal processing such as an equalizer or a compressor on the audio signal supplied from the corresponding MIX bus 34. Each of the output channels 35 sends the audio signal after the signal processing to the output patch 36. The output patch 36 assigns each of the plurality of the output channels 35 to any one port of output ports in the AOUT port (A Output) 37 and DOUT port (D output) 38. Accordingly, the audio signal is supplied from the output channel 35 to the one port.

Each input channel 33 includes INSERTs 33A. Each INSERT 33A is an insertion point that has a virtual slot and is provided between two processing blocks in each channel.

Each output channel 35 includes INSERTs 35A. Each INSERT 35A is an insertion point that has a virtual slot and is provided between two processing blocks in each channel.

In addition, the virtual slots may also be provided in predetermined positions other than the input channels 33 and the output channels 35. The example of Fig. 3A shows virtual racks 39 that is connected between the input patch 32 and the output patch 36. Each virtual rack 39 includes an INSERT 39A. The INSERT 39A is an insertion point that has a virtual slot, output of which is connectable to any processing block by the input patch 32 and input of which is connectable to any processing block by the output patch 36.

To each virtual slot, an audio signal is supplied from a processing block of the preceding stage. A plug-in 40 can be installed in each of the virtual slots. The user operates the controls 17, to give an instruction to install any plug-in 40 in any virtual slot, and can thus connect the plug-in 40 between desired two signal processing blocks in the signal processing.

In this manner, the user can install a plug-in 40 in each of the virtual slots provided in each of the input channels 33, each of the output channels 35, and the virtual rack 39. Thus, to set a plug-in selected by the user in a virtual slot to process an audio signal thereof is hereinafter referred to as "to install a plug-in."

The imparting section 20 provides a signal processing function of the plug-in 40 installed in the virtual slot.

The assigner 101 of the CPU 10, when the plug-in 40 is installed in each of the virtual slots provided in each of the input channels 33, each of the output channels 35, and the virtual rack 39, confirms with the audio signal processing section 2 whether or not the DSP resource has already been assigned to the plug-in 40 and the signal processing of the plug-in 40 is performed by any DSP (or mounted on any DSP).

The assigner 101, when determining that the plug-in 40 is already mounted, remains as it is (performs nothing). The assigner 101, when determining that the plug-in 40 is not mounted yet (a confirmation is negative), newly assigns DSP resource of the imparting section 20 to the plug-in 40 and causes the signal processing of the plug-in 40 to be started by any DSP using the assigned resource.

Accordingly, in any case, the signal processing of the plug-in 40 will be performed in the imparting section 20. Then, the audio signal to be supplied from the processing block of the preceding stage of the virtual slots is supplied from the mixing processing section 19 to the imparting section 20 through the audio bus 22 and is inputted into the signal processing of the plug-in 40 installed in the virtual slot.

In a case in which the plug-in 40 is installed in the virtual slot of a certain channel, as shown in Fig. 3B, the audio signal that is outputted from the processing block of the preceding stage of the virtual slot of the certain channel is defined as insertion output (INSERT OUT). The audio signal as the INSERT OUT is supplied from the mixing processing section 19 to the imparting section 20 through the audio bus 22. The imparting section 20 performs the signal processing of the corresponding plug-in 40. The audio signal after signal processing is defined as insertion input (INSERT IN), is returned from the imparting section 20 to the mixing processing section 19 through the audio bus 22, and is supplied to a processing block of the subsequent stage of the virtual slots. It is noted that a predetermined position (a slot of the virtual slots) in the signal processing may be set as desired by the user.

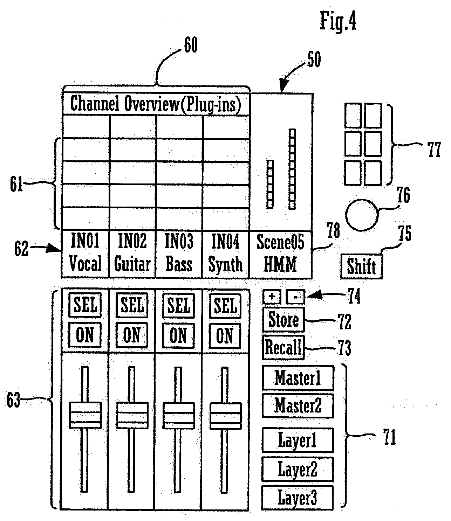

Subsequently, Fig. 4 is a view showing a configuration of an operation panel of the digital mixer 1. Fig. 4 depicts only a part of the panel for installation of the plug-in 40 and for scene, store, and recall operations.

As shown in Fig. 4, the digital mixer 1 includes on the operation panel a touch screen 50, a channel setting section 60, a slot operation section 61, a channel indicator 62, a channel strip 63, a layer selection switch 71, a store button 72, a recall button 73, increase/decrease buttons 74, a shift button 75, a touch and turn knob 76, each of keys 77, and a scene indicator 78. All the above described components on the operation panel correspond to the display device 16 and the control 17 that are shown in Fig. 1A.

The touch screen 50 is the display device 16 on which a touch panel is stacked and displays a GUI (graphical user interface) screen for accepting an operation by the user.

The screen shown in Fig. 4 is a plug-in installation screen for receiving an installation instruction to install a plug-in 40 from the user for each channel of four input channels 33. The channel setting section 60 is an area in which the installation instruction to install the plug-in 40 is received from the user. The user interface 102 displays an image of the virtual slots. In the example, each channel includes four slot operation sections 61 corresponding to four slots of the virtual slots.

On the screen shown in Fig. 4, the four slot operation sections 61 correspond to the virtual slots provided in the INSERT 33A of the input channel 33. The user touches any one of the four slot operation sections 61. The CPU 10 causes the touch screen 50 to display a selection menu that indicates a plurality of the plug-ins 40 that is capable of being installed in a touched slot operation section 61. The user selects a desired plug-in 40 among the plug-ins 40 and performs an operation of installing the plug-in 40 in an appropriate slot operation section 61. Accordingly, the user interface 102 of the CPU 10 shown in Fig. 1B receives an installation instruction to install the plug-in 40 in the virtual slot.

The assigner 101, when the plug-in 40 is installed in the virtual slot, in a case in which the plug-in 40 installed in the virtual slot has not been mounted (in a case in which the DSP resource has not been assigned), assigns unused (not assigned yet) DSP resource of the imparting section 20 to the installed plug-in 40. It is noted that the plug-ins 40 installed in the four slot operation sections 61 shown in Fig. 4 are coupled in series.

In addition, on the screen shown in Fig. 4, the channel indicator 62 is an area in which the number and the name of a channel are indicated.

The channel strip 63 is an area in which a plurality of controls that receive an operation to one channel are arranged vertically. The channel strip 63, on the screen of the touch screen 50, configures an operation section that receives an operation to one channel, together with a part displayed on the upper side of the channel strip 63. In Fig. 4, the operation sections for four channels are arranged horizontally.

To the operation sections, according to a layer selected by the operation of the layer selection switch 71, the four input channels 33 or the four output channels 35 configuring the layer are assigned. For example, when a switch of "Layer 1" is operated, the first input channel 33 to the fourth input channel 33 are assigned to each of the operation sections. Fig. 4 shows a state in which the first input channel 33 to the fourth input channel 33 are assigned to each of the operation sections.

In addition, the increase/decrease buttons 74 are buttons for selecting a scene to be recalled or a scene to be stored. The digital mixer 1 includes a function of saving (storing), as one scene, a current setting (current data) of the signal processing in the audio signal processing section 2 (such as the A I/O 18, the mixing processing section 19, the imparting section 20, and the audio bus 22) at a certain point of time. In addition, the digital mixer 1 also includes a function of invoking (recalling) the stored scene at any given point in time and causing the setting of the signal processing to be restored.

The user can select a scene to be stored and recalled among a plurality of scenes by operating the increase/decrease buttons 74. The scene is stored in a predetermined storage area of the flash memory 11 or an external memory (not shown). Hereinafter, such a memory is referred to as a "scene memory."

The touch screen 50 also includes on the screen the scene indicator 78 that indicates the number and the name of a scene selected by the increase/decrease buttons 74. The indication of the number of the name of the scene flashes when the selected scene is different from the scene that has been recalled last. The indication of the number of the name of the scene does not flash when the selected scene matches the scene that has been recalled last.

The store button 72 is a button for giving an instruction to store a scene. If the user operates the store button 72, the digital mixer 1, as one scene, stores the setting (current data) of the signal processing at a point in time in the scene memory.

The recall button 73 is a button for giving an instruction to recall a scene. If the user operates the recall button 73, the digital mixer 1 reads out one scene that has been stored in the scene memory, and then replaces the current data with a read-out scene. Such a function corresponds to the function of the recalling section 103. The recall operation by the recalling section 103 can function even while the digital mixer 1 performs signal processing. In a case in which there is a risk that a parameter value may be replaced and noise may be generated, the CPU 10 temporarily mutes an audio signal that may be affected or interpolates (does smoothing) the parameter value to prevent the parameter value from drastically changing.

It is noted that the setting to be stored and recalled as a scene includes installing the plug-in 40 in the virtual slot and also setting the signal processing of the installed plug-in 40. The setting (a plurality of parameters) to be stored in the store memory as the preset is not limited to an example of the above described scene. For example, the preset may include only the installation of the plug-ins 40 in all the virtual slots of the digital mixer 1 and the setting of the installed plug-ins 40. Alternatively, the preset may include the setting including the installation of the plug-ins 40 in the virtual slots of the input channel 33 and the setting of the signal processing of the installed plug-ins 40.

Other than the above described components, the shift button 75 is a button that changes (shifts) the functions of other buttons to other functions in a case in which the user presses one of other buttons while pressing the shift button 75. In addition, the touch and turn knob 76 is a rotary encoder that is capable of being used for assigning a parameter on the screen displayed on the touch screen 50 and for editing a value of the parameter.

Each of the keys 77 is an control for calling setting screens of various functions on the touch screen 50. For example, the user can cause the touch screen 50 to display the plug-in installation screen illustrated in Fig. 4, a rack edit screen, or a recall safe setting screen (not shown) by operating each of the keys 77. On the recall safe setting screen, when recalling a scene, the user can disable ("safe") the recall of only a part of the setting and keep the setting before the recall. Such setting is referred to as recall safe setting. The user can optionally specify which setting is to be "safed." On the recall safe setting screen, the user can specify a part of the input channels 33 and the output channels 35 as a target to be protected from change of the value. The user can specifies any channel as a target to be protected and protects any of the setting of signal processing, the installation of the plug-in 40 in the virtual slot, and the setting of the signal processing of the installed plug-in 40. Such a setting of the recall safe corresponds to the function of protection means.

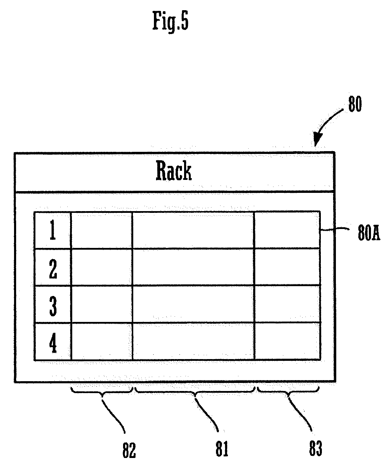

Fig. 5 is a view showing a rack edit screen 80 displayed on the display device 16 when the plug-in 40 is installed in the virtual slot of the virtual rack 39.

The rack edit screen 80 shown in Fig. 5 includes four racks 80A with rack numbers "1" to "4," for example. Each the racks 80A includes a slot operation section 81, and a patch section 82 and a patch section 83 that are displayed on the opposite sides of the slot operation section 81. If the user touches the slot operation section 81 of a desired rack 80A, the CPU 10 causes the touch screen 50 to display a selection menu that indicates a plurality of the plug-ins 40 that is capable of being installed in a touched slot operation section 81. The user selects a desired plug-in 40 among the plug-ins 40 and performs an operation of installing the plug-in 40 in the appropriate slot operation section 81.

The assigner 101, when the plug-in 40 is installed in the slot operation section 81, in a case in which the plug-in 40 installed in the appropriate virtual slot has not been mounted (in a case in which the DSP resource has not been assigned), assigns unused DSP resource of the imparting section 20 to the installed plug-in 40.

The patch section 82 indicates the name of a preceding processing block that has been set as the insertion output of each slot operation section 81 while the patch section 83 indicates the name of a subsequent processing block that has been set as the insertion input of each slot operation section 81.

The user opens a patch setting screen by touching the patch section 82 or the patch section 83 of each rack 80A and can set up a place to newly install the rack 80A by selecting either of the preceding processing block and the subsequent processing block on the screen.

One of the characteristics of the digital mixer 1 having the above described configuration is the management of DSP resource in a case in which a scene is stored or deleted.

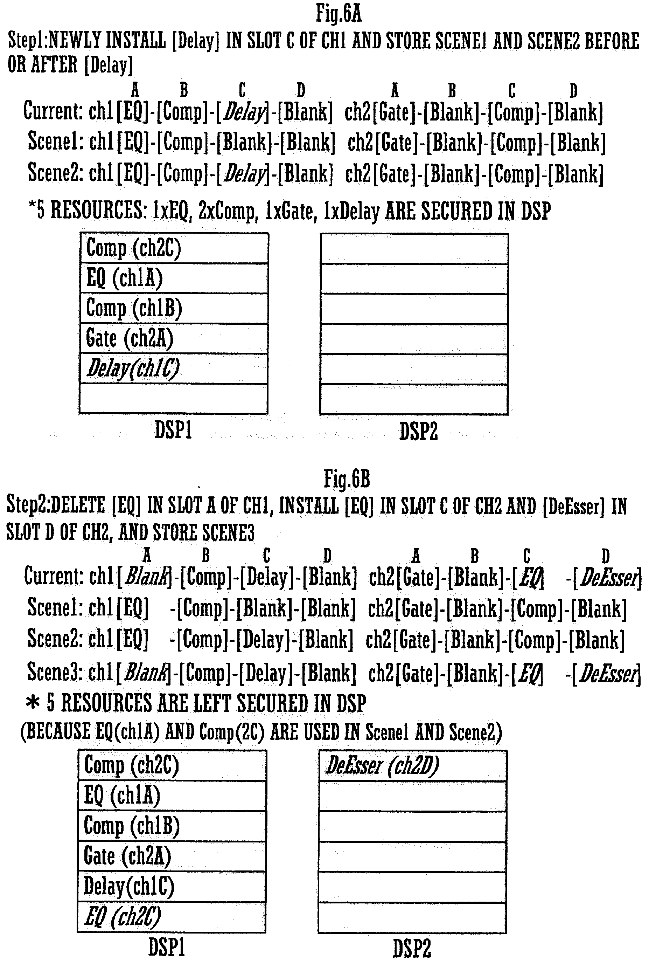

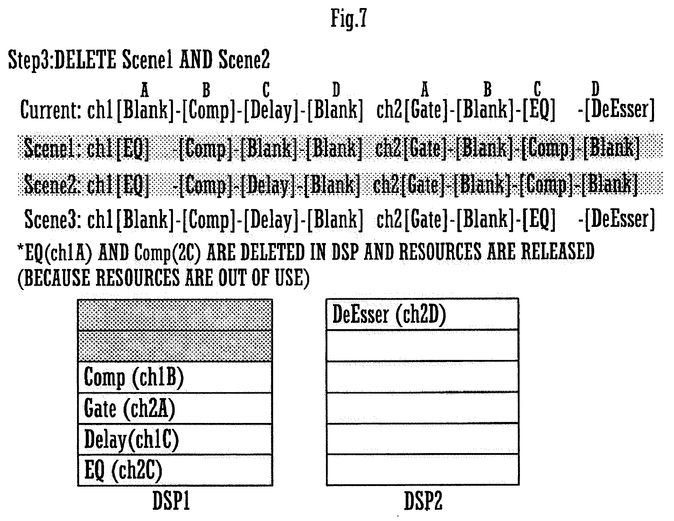

Fig. 6A, Fig. 6B, and Fig. 7 are views showing an example of DSP resource management in a case in which the user stores and deletes some scenes. A DSP resource management algorithm according to the preferred embodiment is configured so that all the plug-ins installed in slots are mounted in any of all the scenes (or all presets) stored in a scene memory and the current data.

Accordingly, even if the signal processing of the plug-in 40 is not used in the current data and if the signal processing of the plug-in 40 is used in any of the scenes (or the presets), the signal processing of the plug-in 40 is kept performed in the imparting section 20.

In such a case, even if any scene is recalled, the imparting section 20 merely changes the connection of input and output of the signal processing performed by the imparting section 20, so that the recall of the scene does not interrupt the signal processing of sounds.

In addition, if the recall safe function is set to a virtual slot, mount of a plug-in 40 on the slot and the parameter of the mounted plug-in are preserved, so that the recall of a desired scene does not break the sound from the slot.

Moreover, when a plug-in 40 is installed in a virtual slot for the first time, a necessary amount of resource of the DSP1, the DSP2, the DSP3, and the DSP4 of the imparting section 20 is assigned to the plug-in 40 and the signal processing of the plug-in 40 is performed using the assigned resource (that is to say, the plug-in is mounted on the imparting section 20).

For convenience of description, only the virtual slots of the channel 1 and the channel 2 of the input channels 33 and the DSP1 and the DSP2 are described in this embodiment, the similar approach is applicable to any cases where any of the virtual slots in other channels, and the virtual slots in the virtual rack, or other DSPs concerns.

In the examples shown in Fig. 6A, Fig. 6B, and Fig. 7, the user can select any plug-in from among an equalizer (EQ), a compressor (Comp), a gate (Gate), a delay (Delay), and a de-esser (DeEsser) and install the selected plug-in in a slot in each channel. In Fig. 6A, Fig. 6B, and Fig. 7, each of the four virtual slots (A, B, C, and D) of each channel is indicated by square brackets ([ ]). To indicate a plug-in installed in a virtual slot, the name of the plug-in is described in a pair of brackets correspond to the virtual slot ([EQ], [Comp], etc., for example). The virtual slot in which the plug-in is not installed is described as blank brackets ([Blank]). In addition, a plug-in installed in a virtual slot may be specified by the virtual slot in which the plug-in is installed. Therefore, a installed plug-in can be indicated by an identifier of the virtual slot in which the plug-in is installed. For example, the identifier of the virtual slot C of the channel 2 is "ch2C", and a compressor installed in the virtual slot C is indicated as "Comp(ch2C)." Each of Fig. 6A, Fig. 6B, and Fig. 7 further shows a box on the left side that indicates all resource of the DSP1 and a box on the right side that indicates all resource of the DSP2, and both boxes are each divided into six parts of resource. For convenience of description, while each part of the resource is depicted as each of six small boxes of the same size. In actual cases, the size of each part varies for each small box since the necessary amount of DSP resource is different for each plug-in. Moreover, the number of boxes is not always six, but may be any number.

In Step 1 shown in Fig. 6A, the digital mixer 1 first receives, from the user, an instruction to store a scene 1 (Scene 1) into a scene memory in an initial setting state, next receives an instruction to newly install Delay in the slot C of the channel 1, and then receives an instruction to store a scene 2 (Scene 2) into the scene memory.

In the initial setting state in which Scene 1 is stored in the scene memory by the user, EQ and Comp are installed in the virtual slots A and B respectively among the four virtual slots displayed in the slot operation section 61 of the channel 1. In addition, Gate and Comp are installed in the virtual slots A and C respectively among the four virtual slots of the channel 2.

A part of resource of the DSP1 is assigned to each of the plug-ins (EQ (ch1A), Comp (ch1B), Gate(ch2A), Comp (ch2C)) installed in the virtual slots.

Therefore, the stored Scene 1 includes the installation of the EQ (ch1A) and the Comp (ch1B) in the channel 1 and the installation of the Gate(ch2A) and the Comp (ch2C) in the channel 2.

Then, when the user newly installs Delay in the virtual slot C of the channel 1, a part of unused resource of the DSP1 is assigned to the Delay (ch1C). In other words, the assigner 101, when the user interface 102 receives an instruction to install a plug-in in a virtual slot from the user, confirms whether or not the plug-in is already mounted and if the plug-in is not installed, then assigns a part of resource of any DSP to the plug-in and causes the audio signal processing section 2 to mount the plug-in on the DSP.

It is noted that, in Fig. 6A, Fig. 6B, and Fig. 7, a name of a plug-in or a "Blank" in the square brackets of a virtual slot is represented in italics if the installation in the virtual slot has been newly changed at the moment.

When the scene 2 of this state is stored in the scene memory, the resource of the DSP1 is already secured for the Delay (ch1C).

In Step 2 shown in Fig. 6B, the digital mixer 1 sequentially receives from the user a deletion instruction to delete (uninstall) the EQ (ch1A) installed in the slot A of the channel 1, receives an instruction to replace the Comp (ch2C) installed in the slot C of the channel 2 with EQ, and receives an instruction to store a scene 3 (Scene 3) in the scene memory after newly installing DeEsser in the slot D of the channel 2.

In the example shown in Fig. 6B, a part of DSP resource shall be newly assigned to the EQ (ch2C) and the DeEsser(ch2D) to which any resource has not been assigned. A part of unused resource of the DSP1 is assigned to the EQ (ch2C). However, since enough resource for the DeEsser (ch2D) does not remain in the DSP1, a part of unused resource of the DSP2 is assigned to the DeEsser(ch2D) instead.

Then, the EQ (ch1A) installed in the virtual slot A of the channel 1 is deleted (uninstalled) and the Comp (ch2C) installed in the virtual slot C of the channel 2 is replaced with EQ. However, in Scenes 1 and 2, the EQ (ch1A) and the Comp (ch2C) are still in use. Therefore, the parts of resource assigned to the EQ (ch1a) and the Comp (ch2C) are not released and the signal processing of the EQ (ch1A) and the Comp (ch2C) continuously performed in the DSP1.

Thus, in the preferred embodiment, all the plug-ins being in use in any of all the scenes (Scene 1, Scene 2, and Scene 3) stored in the scene memory and the current data are mounted on the DSPs in the imparting section 20. In other words, the audio signal processing section 2, even in a case of receiving an instruction (a deletion instruction) to uninstall the plug-in from the virtual slot, keeps the plug-in still mounted.

Subsequently, in Step 3 shown in Fig. 7, the digital mixer 1 receives an instruction from the user to delete Scene 1 and Scene 2 from the scene memory. In this case, the EQ (ch1A) of the virtual slot A of the channel 1 and the Comp (ch2C) of the virtual slot C of the channel 2 become not in use in any of all the scenes (Scene 1, Scene 2, and Scene 3) stored in the scene memory, and the current data. Therefore, the digital mixer stops the signal processing of the EQ (ch1A) and the Comp (ch2C) by the DSP1 and releases the parts of resource assigned to the EQ (ch1A) and the Comp (ch2C) of the DSP1. However, even in such a case, all the other plug-ins in use in any of all the scenes (Scene 1, Scene 2, and Scene 3) stored in the scene memory and the current data are kept mounted. The assigner 101 in the CPU 10, detects any plug-in that is not installed in the virtual slot at the moment and not specified (not in use) in any preset is mounted on the audio signal processing section 2, unmounts the plug-in from the audio signal processing section 2.

Contrary, the conventional digital mixers, not to break sounds from the plug-ins at the time of scene recall, are designed to be capable of changing the installation of the plug-ins in the slots, only in the configuration mode in which the operation as a mixer is stopped and a mixer configuration is set by the user.

However, the digital mixer 1 according to this embodiment operates with the DSP resource management algorithm as illustrated in Fig. 6A, Fig. 6B, and Fig. 7. The digital mixer 1 can changes the installation of the plug-ins in the virtual slots in the execution mode in which signal processing is performed, without changing the assignment of resource to the plug-ins at the time of scene recall. Consequently, the digital mixer 1 can avoid a break of sounds from the plug-ins by the scene recall. Since the digital mixer 1 mounts all the plug-ins, in use in any of all the scenes stored in the scene memory and the current data, on the DSPs, even if any scene is recalled, it is not necessary to newly assign a part of DSP resource to any plug-in. In addition, since the part of DSP resource used by a mounted plug-in installed in a virtual slot is secured for the virtual slot, even if the user sets any recall safe function, sound break of the plug-in shall not occur.

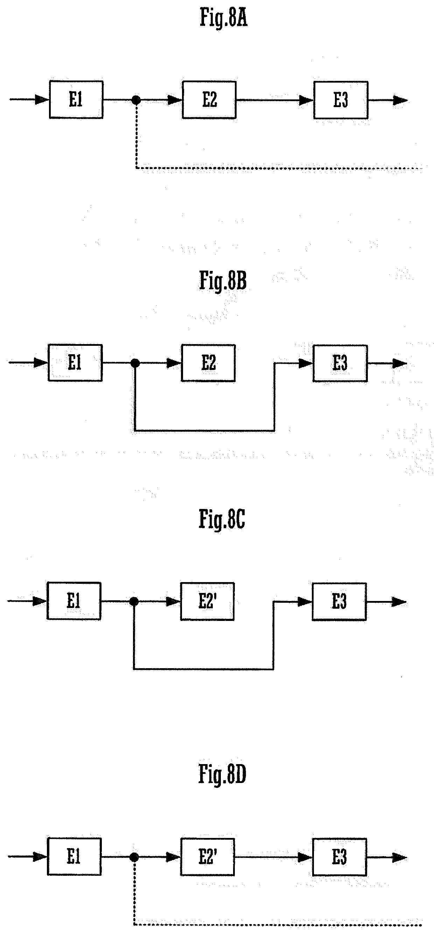

Subsequently, Fig. 8A, Fig. 8B, Fig. 8C, and Fig. 8D (Fig. 8 as a whole) are views illustrating an example procedure to change over from a first state in which a plug-in is installed in a virtual slot (target slot) of any of the channels or the virtual rack to a second state in which another plug-in is installed in the virtual slot without generating noise, according to a user operation such as scene recall.

The example, as shown in Fig. 8A, shows that, in the first state, three signal processings of a first plug-in E1 installed in a first slot (preceding slot), a second plug-in E2 installed in a second slot (target slot), and a third plug-in E3 installed in a third slot (subsequent slot) are sequentially performed on an audio signal, and then the second plug-in E2 in the second slot is changed over to a fourth plug-in E2' according to the user operation. It is noted that the preceding slot and the subsequent slot are not necessarily to be a "virtual slot" in which the installation of the plug-in is changeable. For example, the preceding slot may be a "processing block E1" and the subsequent slot may be a "processing block E3" and both are unchangeable.

At first, as shown in Fig. 8B, the digital mixer 1 changes a route of the audio signal from the first plug-in E1 in the preceding slot to the third plug-in E3 in the subsequent slot, from an E2 path including the second plug-in E2 to a bypass path not including any plug-in (bypassing the second plug-in E2). At the moment, the digital mixer 1 may perform any additional processing such as cross fading from the audio signal in the E2 path to the audio signal in the bypass path to prevent a drastic change (noise) in the audio signal supplied to the third plug-in E3.

If the digital mixer 1 detects that the second plug-in E2 in the target slot is not in use in any of all the scenes and the current data, then the digital mixer 1 stops the signal processing of the second plug-in E2 in the target slot and releases the DSP resource assigned to the second plug-in E2. Then, the digital mixer 1, as shown in Fig. 8C assigns any DSP resource to the fourth plug-in E2' of the target slot if necessary and starts the signal processing of the fourth plug-in E2' on the audio signal supplied from the first plug-in E1 in the preceding slot. It is noted that the mounting processing (the assignment of DSP resource) shown in Fig. 8C is unnecessary if the fourth plug-in E2' is already mounted.

Finally, as shown in Fig. 8D, the digital mixer 1 changes the route from the bypass path shown in Fig. 8B to an E2' path including the fourth plug-in E2'. As a result, a change in installation of a plug-in in the target slot is completed without any break of sound. In the same way as above, the digital mixer 1 may perform any additional processing such as cross fading from the audio signal in the bypass path to the audio signal in the E2' path to prevent a drastic change (noise) in the audio signal supplied to the third plug-in E3.

It is noted that, if the user operation is to uninstall the second plug-in E2 installed in the target slot to make the slot vacant (blank), then the digital mixer 1 only performs the operations shown in Fig. 8A and Fig. 8B. Besides, if the target slot is vacant (blank) and the user operation is to install a plug-in newly, then the digital mixer 1 only performs the operations shown in Fig. 8C and Fig. 8D. Moreover, if the user operation is to replace the second plug-in E2 with the fourth plug-in E2' , then the digital mixer 1 may directly change (cross fade) the route from the E2 path to the E2' path without using the bypass path. Further, in a case in which a little noise is acceptable, the digital mixer 1 may instantly change the route without cross fading. In such a case, the digital mixer 1 may temporarily use a low pass filter at the time of route change to filter the audio signal supplied to the third plug-in E3 in the subsequent slot, and the noise may be reduced by the low pass filter.

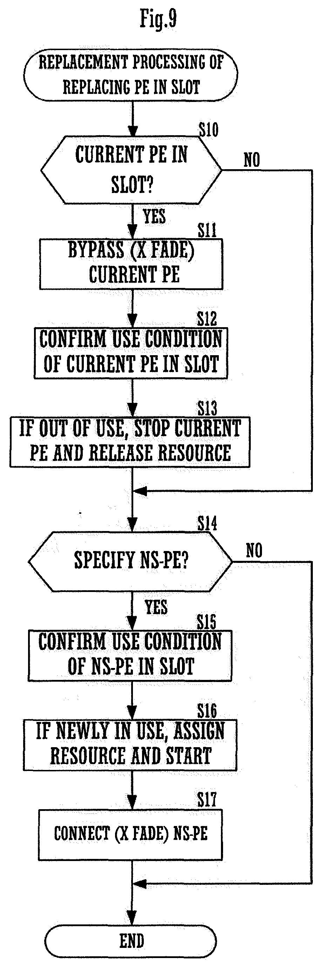

Fig. 9 is a flow chart showing change processing of a plug-in (hereafter referred to as "PE") in a target slot, the change processing being performed by the CPU 10 of the digital mixer 1. Through the above processing, the procedure of replacing the plug-ins illustrated in Fig. 8A, Fig. 8B, Fig. 8C, and Fig. 8D is achieved.

The CPU 10, when detecting a user operation to change the installation of a plug-in in any virtual slot (a target slot) of any of the channels the virtual racks, starts the change processing in Fig. 9. In this case, the user operation may be one of three kinds of operations: an operation of installation to newly select a plug-in and change the target slot from the blank slot to the newly-selected PE installed slot, an operation of replacement to newly select a plug-in and replace a plug-in installed in the target slot from the current PE to the newly selected PE, and an operation of deletion (uninstall) to change the target slot from the current PE installed slot to the blank slot.

The CPU 10 determines whether or not any plug-in (a current PE) is installed in the target slot (S10). In other words, the CPU 10 determines whether or not the user operation is of "replacement" or of "deletion." The CPU 10, if a current PE is installed in the target slot (YES in S10), controls the audio signal processing section 2 to change the route from the condition in Fig. 8A to the condition in Fig. 8B. For example, the CPU 10 causes the audio signal processing section 2 to cross fade an audio signal supplied to a plug-in in the subsequent slot from the audio signal in a current PE path to the audio signal in a bypass path (S11).

Next, the CPU 10 confirms whether or not the current PE installed in the target slot is still in use in any of all the scenes stored in the scene memory and the current data (use condition of the current PE) (S12). The CPU 10, if the current PE is not used in any of the scenes and the current data, causes the audio signal processing section 2 to stop the signal processing of the current PE in the target slot and release (unmount) the assigned DSP resource (S13). The CPU 10, if the current PE is used in any of the scenes and the current data, leaves the current PE in the target slot mounted. In such a case, the audio signal processing section 2 continues the signal processing of the current PE in the target slot on the audio signal from the preceding slot, but the processed audio signal is not supplied to any processing block. On the other hand, if the CPU 10 determines that there is no current PE in the target slot (NO in S10), the CPU 10 skips the processing from S11 to S13 and goes to S14.

After that, the CPU 10 determines whether or not a plug-in to be replaced in the target slot is newly selected by the user operation (S14). In other words, the CPU 10 determines whether or not the user operation is of " installation" or of "replacement." If the user newly selects any plug-in (ns-PE) out of a plug-in selection menu opened for the target slot (YES in S14), the CPU 10 confirms whether or not the ns-PE in the target slot is used in any of all the scenes stored in the scene memory and the current data (use condition of the ns-PE) (S15).

The CPU 10, if the ns-PE in the target slot is not used in any of the scenes and the current data and is used for the first time, assigns a part of unused resource of any DSP in the imparting section 20 to the ns-PE of the target slot and starts the ns-PE using the assigned resource (S16). In other words, the CPU 10 controls the audio signal processing section 2 to cause the audio signal processing section 2 to newly mount the ns-PE on the DSP. During the processing, in a case in which the DSP resource is short and the audio signal processing section 2 is not capable of mounting a ns-PE on any DSP, the CPU 10 may issue a warning of "resource shortage" to the user through the touch screen 50 and the like. If the ns-PE is already used in any of the scenes and the current data, the use means that the ns-PE is already mounted on the audio signal processing section 2. Therefore, in this case, the CPU 10 has nothing to do in S16. At the moment, the mounted ns-PE performs signal processing on the audio signal supplied from the preceding slot. The CPU 10 controls the audio signal processing section 2 to change the route from the condition in Fig. 8C to the condition in Fig. 8D. For example the CPU 10 causes the audio signal processing section 2 to cross fade the audio signal supplied to the plug-in in the subsequent slot from the audio signal in the bypass path to the audio signal in a ns-PE path (S17), and ends the PE change processing.

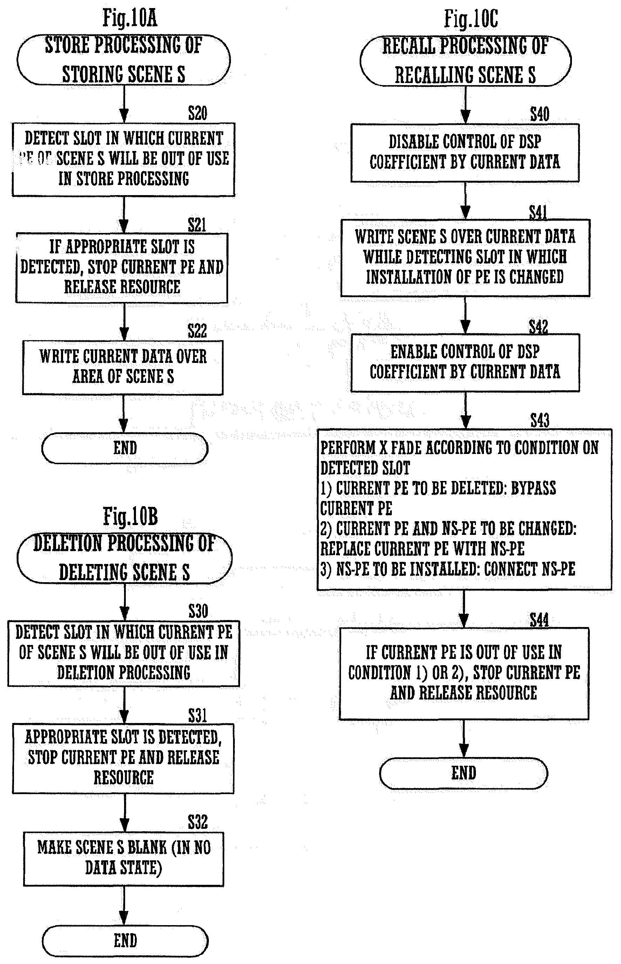

Next, Fig. 10A is a flow chart of store processing of a scene S performed by the CPU 10 of the digital mixer 1. The store processing is to store the current setting of the signal processing of the audio signal processing section 2 (current data in the current memory) into the scene memory as a scene.

The CPU 10, when detecting a store operation (such as the operation of the store button 72) of a scene by the user, starts the processing in Fig. 10A. At the moment, the user has selected a scene S and the scene indicator 78 indicates information of the scene S.

In the processing in Fig. 10A, the CPU 10 confirms whether or not all plug-ins (current PEs) in any slots in the scene S before being overwritten (current scene S) are used in any of all the scenes stored in the scene memory, except the scene S, and the current data in the current memory to be newly stored as the scene S (S20.

The CPU 10, if confirming that any current PE of the current PEs is not used in any of all the scenes except the scene S stored in the scene memory and the current data in the current memory, detects the current PE in any virtual slot as "an obsolete PE in the virtual slot to be out of use (if the scene S is stored) " (S20) .

The CPU 10, if confirming that there is the obsolete PE of the virtual slot, controls the audio signal processing section 2 to cause the audio signal processing section 2 to stop the signal processing of the obsolete PE and to release (unmount) the DSP resource secured for the obsolete PE (S21). The CPU 10 does not unmount any of the current PEs from the audio signal processing section 2 if there is no obsolete PE. Next, the CPU 10 overwrites the scene S in the scene memory with the current data in the current memory (S22) and ends the store processing of the scene S.

Fig. 10B is a flow chart of deletion processing of a scene S performed by the CPU 10 of the digital mixer 1. The processing deletes a scene in the scene memory as illustrated in Fig. 7.

The CPU 10, when receiving a deletion operation (such as the operation of a not shown delete button) of a scene by the user, starts the processing shown in the flow chart of Fig. 10B. At the moment, the user has selected the scene S and the scene indicator 78 indicates the information of the scene S.

In the deletion processing in Fig. 10B, the CPU 10 confirms the use condition of current PEs in the scene S (S30). In other words, the CPU 10 confirms whether or not all plug-ins used in the scene S before being deleted (the current PEs in the current scene S) is used in any of all the scenes stored in the scene memory, except scene S, and the current data.

The CPU 10, if confirming that any current PE in the scene S is not used in any of all the scenes except the scene S stored in the scene memory and the current data, detects the current PE in any virtual slot as "an obsolete PE in the virtual slot to be out of use (if the scene S is deleted)" (S30).

The CPU 10, if confirming that there is the obsolete PE of the virtual slot, controls the audio signal processing section 2 to cause the audio signal processing section 2 to stop the signal processing of the obsolete PE and to release (unmount) the DSP resource (S31). The CPU 10 does not unmount any of the current PEs if there is no obsolete PE. Next, the CPU 10 deletes the scene S from the scene memory, makes a blank scene S without data in the scene memory (S32), and ends the deletion processing of the scene S.

Fig. 10C is a flow chart of recall processing of a scene S performed by the CPU 10 of the digital mixer 1. In the recall processing, one scene in the scene memory is read out and the current data is replaced with the read out data.

The CPU 10, when receiving a recall operation (such as the operation of the recall button 73) of a scene S by the user, starts the processing shown in the flow chart of Fig. 10C. At the moment, the user has selected the scene S and the scene indicator 78 indicates the information of the scene S.

At first, the CPU 10 disables the control of the audio signal processing in the audio signal processing section 2 based on the current data (S40). Combining overwriting at S41 with the disabling at S40 and enabling at S42, regardless of what order the data is written in the current memory at S41, make all portions of data of the scene S applied to the signal processing in the audio signal processing section 2 at the same timing at S42.

Subsequently, the CPU 10 overwrites each portion of the current data with data of the corresponding portion of the scene S in an order (S41). While overwriting each portion, the CPU 10 detects any slot, as a target slot, in which the installed plug-in is changed by the recall, from among all the virtual slots of all the channels and all the virtual slots of the virtual rack (S41). The change of the installation of the plug-in in this case, similar to the case in Fig. 9, may be one of three kinds of operations: installation of a plug-in, replacement of a plug-in, or deletion of a plug-in.

Next, the CPU 10 enables the control of the audio signal processing in the audio signal processing section 2 based on the current data (S42). When the CPU 10 enables the control (control of a DSP coefficient and the like), the current data overwritten with the data of the scene S is applied to the signal processing in the audio signal processing section 2 (S42).

Next, the CPU 10 controls the audio signal processing section 2, with respect to each of the detected slots (each detected as a target slot at S41), to change a route of an audio signal around each target slot in the same way as illustrated in Fig. 8 (S43). For example, the CPU 10 causes the audio signal processing section 2 to perform cross fade (X fade) according to the change (one of three conditions) (S43).

First Condition is a case in which the current PE is deleted and the target slot becomes blank. The CPU 10 controls the audio signal processing section 2 to perform cross fade from the audio signal in the current PE path to the audio signal in the bypass path. The current PE corresponds to the plug-in E2 in Fig. 8A and the current PE is bypassed as shown in Fig. 8A and Fig. 8B.

Second Condition is a case in which the current PE in the target slot is replaced with a ns-PE. In such a case, the CPU 10 controls the audio signal processing section 2 to perform cross fade from the audio signal in the current PE path to the audio signal in the ns-PE path. The current PE corresponds to the plug-in E2 shown in Fig. 8A, and the ns-PE corresponds to E2' shown in Fig. 8C.

Third Condition is a case in which a ns-PE is newly installed in the target slot. In such a case, the CPU 10 controls the audio signal processing section 2 to perform cross fade from the audio signal in the bypass path to the audio signal in the ns-PE path. The ns-PE corresponds to the plug-in E2' shown in Fig. 8C and is newly connected as shown in Fig. 8C and Fig. 8D.

The recall processing of the preferred embodiment is characterized in that the ns-PE newly installed in the target slot has been mounted surely on any DSP in the audio signal processing section 2 beforehand. Next, the CPU 10, for each of the target slots corresponded to "deletion" of the First Condition or "replacement" of the Second Condition in S43, confirms whether or not a current PE in the target slot becomes an obsolete PE, and, if detecting that any current PE becomes the obsolete PE, then unmounts the current PE from the audio signal processing section 2 (stops the signal processing and then releases the assigned DSP resource) (S44), and ends the recall processing.

The digital mixer 1 according to the above described preferred embodiment is capable of changing the installation of a plug-in in a virtual slot, in the execution mode, and is also capable of preventing sound from being interrupted, the sound being processed by the plug-in that is not changed by the recall operation of the preset and the like.

It is noted that the configuration of the apparatus, the operation panel, the specific configuration of the screen, the specific processing procedure, and the like are not limited to what have been described in the above described preferred embodiment.

The digital mixer 1, whenever the installation of the plug-in is changed in the current data or in any of the scenes, detects any plug-in that is no longer in use in any of the current data and all the scenes, and performs processing of unmounting the plug-in (there are four occasions of S12 and S13, S20 and S21, S30 and S31, and S44 in this embodiment). However, it is not essential to perform the detection and unmounting processing in all of the four occasions. For example, the digital mixer 1 may omit at least one occasion. The digital mixer 1, in a case of omitting any occasion, according to a user instruction, at every predetermined period, or as background processing while a CPU load is small, performs similar detection and unmounting processing.

In addition, the function of the above described digital mixer 1 can be achieved by making a general purpose computer run a corresponding program. In such a case, the computer preferably has a function of inputting and outputting an audio signal and a plurality of DSPs that perform signal processing. Further, the function of the digital mixer 1 can also be achieved by distributing the function to a plurality of apparatuses and making the plurality of apparatuses cooperate with one another as one system similar to the digital mixer 1.

In addition, while the digital mixer 1 includes a plurality of DSPs, the number of DSPs may be only one. A DSP requires a much longer time for changing calculation resource from a certain plug-in processing to another plug-in processing than a CPU. Therefore, even if the number of DSPs is one, it is necessary to assign resource explicitly to the plug-in installed in the slot. Further, even in a case in which the CPU performs signal processing, if a plurality of CPU cores are prepared, and each part of processing of plug-ins is distributed to each of the CPU cores, the replacement of the processing between the cores takes considerable time. In such a case, like the DSP, explicit resource assignment is required for the CPU in the same way as the DSP and this invention may be applicable.

Further, the number of virtual slots per one channel is not limited to four but arbitrarily determined. Moreover, the number of virtual slots may differ for each channel. It is noted that the plug-in installed in the virtual slot may be any kind of plug-in such as an equalizer, a compressor, a gate, a reverb, an amp simulator, and a panner.

In addition, the above described program may be stored in a non-volatile storage medium such as an EEPROM incorporated in the main body or may also be provided by storing the program in any non-volatile storage medium such as a memory card, a CD, or a CD-R. The program stored in such storage media is loaded in the main body and required processing is performed.

Further, the above described program may be downloaded from a server through a network.

In addition, the preferred embodiment is applicable to various apparatuses other than a digital mixer. The preferred embodiment is applicable to any audio signal processing apparatus that has at least one channel that processes an audio signal, has a function of installing a virtual signal processing object such as a plug-in in a virtual container such as a virtual slot of the channel, and needs to assign processing resource of a processor to the signal processing object for the installation, and causes the object to perform signal processing using the assigned resource. For example, the preferred embodiment is applicable to a microphone, an effector, a recorder, an amplifier, a speaker, a synthesizer, or the like.

Finally, the above described preferred embodiments are to be considered in all respects as illustrative and not restrictive. The preferred embodiments can be combined with each other if necessary. The scope of the present invention is defined by the following claims, not by the foregoing preferred embodiments. Further, the scope of the present invention is intended to include the scopes of the claims and all possible changes and modifications within the senses and scopes of equivalents.

### INDUSTRIAL APPLICABILITY

The digital mixer 1 as various preferred embodiments of the audio signal processing apparatus according to the present invention does not include an undo (UNDO) function. Therefore, the digital mixer 1 detects a plug-in that will be out of use in the range of the current data and all the scenes of the scene memory. However, in a case in which the digital mixer 1 includes the undo function, a buffer for the undo function also corresponds to a preset in a broad sense. Therefore, the digital mixer 1 also needs to add the buffer for the undo function in a detection range. For example, in a case in which a certain scene is recalled, the current data before recall is stored in an undo buffer for recall processing so as to undo the recall processing. In a case in which the current data is stored in a certain scene, the data that has been in the scene before store processing is stored in an undo buffer for store processing so as to undo the store processing. In a case in which a newly selected plug-in is installed in a virtual slot, the installation of the plug-in in the virtual slot before installing the newly selected plug-in and the setting of the plug-in are stored in a general-purpose undo buffer. In such a case, the mounting of the plug-ins currently used in these undoing buffers is also protected. In other words, the digital mixer 1, in a case in which the plug-in installed in a certain virtual slot is not used in the current data, all the scenes, and all the undo buffers, may unmount the plug-in of the virtual slot.

## Claims

1. A signal processing apparatus (1) that performs signal processing on an audio signal, using a plug-in(40) installed in a virtual slot, the signal processing apparatus(1) comprising:
a memory(11) that stores plug-ins(40), each plug-in(40) to be executed by a signal processor (19,20), using predetermined resource of a signal processing section(2);
the signal processing section(2) that performs signal processing of at least one series of blocks on at least one audio signal, at least one virtual slot for installing the plug-in(40) therein is provided between consecutive two of the blocks;
a user interface(102) that displays an image of the virtual slot, and accepts an installation of any plug-in (40) in the virtual slot from the user; and
an assigner(101) that, in response to the installation of a plug-in from the user, confirms whether or not the plug-in(40) is already mounted on the signal processing section(2), and if the confirmation is negative, assigns the predetermined resource to the plug-in(40) to mount the plug-in(40) on the signal processing section(2), the signal processing section(2) performs signal processing of the mounted plug-in(40) on an audio signal supplied to the virtual slot in which the plug-in(40) is installed.

2. The signal processing apparatus(1) according to claim 1, wherein the user interface(102) accepts the installation while the signal processing section(2) processes the audio signal.

3. The signal processing apparatus (1) according to claim 1 or claim 2, wherein:
the user interface(102) accepts a removal of a installed plug-in(40) from the virtual slot by the user, and
the assignor(101), even when the user interface (102) accepts the removal of a plug-in(40), keeps the plug-in(40) mounted on the signal processing section (2).

4. The signal processing apparatus (1) according to any one of claims 1-3 , further comprising:
a preset memory (11) that stores presets, each preset including parameters for specifying installations of plug-ins (40) in virtual slots; and
a recalling section(103) that, when the user interface(102) accept a recall command of a preset in the preset memory(17) from the user, recalls the preset by collectively installing plug-ins(40) in virtual slots in accordance with the preset in the preset memory(11).

5. The signal processing apparatus(1) according to claim 4, wherein the assigner(101) confirms a condition whether or not a plug-in(40) mounted on the signal processing section(2) is not installed in a virtual slot and an installation of the plug-in (40) in the virtual slot is not specified by any preset in the preset memory(11), and if the confirmation is affirmative, unmounts the plug-in(40) from the signal processing section(2) to release the resource assigned to the plug-in(40).

6. The signal processing apparatus according (1) to claim 5, wherein the assigner(101) executes the confirmation when the user changes a preset in the preset memory(11).

7. The signal processing apparatus (1) according to claim 5, wherein the assigner(101) executes the confirmation when the user installs a plug-in(40) in a virtual slot.

8. The signal processing apparatus (1) according to claim 5, wherein the assigner(101) executes the confirmation in response to an execution command form the user.

9. The signal processing apparatus (1) according to claim 5, wherein the assigner(101) executes the confirmation at every predetermined period.

10. The signal processing apparatus (1) according to any one of claims 1-9, wherein the signal processing section(2) includes at least one signal processor (19,20) and the predetermined resource is resource of the signal processor (19,20).

11. The signal processing apparatus (1) according to any one of claims 1-10, wherein the series of blocks constitute a channel for processing an audio signal, and the virtual slot is provided in the channel.

12. The signal processing apparatus(1) according to claim 11, wherein the signal processing performed by the signal processing section(2) further includes a plurality of channels including the channel each for processing an audio signal and a MIX bus(34) for mixing audio signals processed by the plurality of channels and a virtual slot is provided in each channel.

13. The signal processing apparatus(1) according to claim 11, wherein the signal processing performed by the signal processing section(2) further includes a MIX bus(34) for mixing audio signals supplied thereto and outputting an audio signal as the mixed result, and the channel processes the audio signal output from the MIX bus(34).

14. The signal processing apparatus (1) according to any one of claims 1-13, wherein, when the user interface(102) accepts a changeover from an installation of a first plug-in(40) in the virtual slot to an installation of a second plug-in(40) in the virtual slot from the user, the user interface(102) controls an output of the virtual slot to fade out an audio signal from the first plug-in(40) mounted on the signal processing section(2) and fade in an audio signal from the second plug-in (40) mounted to the signal processing section(2).

15. A controlling method of a signal processing section (2) comprising:
preparing the signal processing section(2) to perform signal processing of at least one series of blocks on at least one audio signal, at least one virtual slot for installing the plug-in(40) therein is provided between consecutive two of the blocks;
storing plug-ins in a memory(11), each plug-in(40) to be executed by a signal processor(19,20), using predetermined resource of the signal processing section(2);
on accepting an installation of a plug-in(40) in the virtual slot from the user, confirming whether or not the plug-in(40) is already mounted on the signal processing section(2), and if the confirmation is negative, assigning the predetermined resource to the plug-in(40) to mount the plug-in(40) on the signal processing section(2), the signal processing section(2) performs signal processing of the mounted plug-in(40) on an audio signal supplied to the virtual slot in which the plug-in(40) is installed.
